# EUROPEAN PATENT SPECIFICATION

(11) **EP 0 594 742 B1**
(45) Date of publication and mention of the grant of the patent: **23.09.1998**
(21) Application number: 92915737.8
(22) Date of filing: 20.07.1992
(51) Int. Cl.: H04M 11/08, H04M 3/42

(54) **TELECOMMUNICATIONS SERVICE NETWORK**
FERNMELDEDIENSTNETZ
RESEAU DE SERVICE DE TELECOMMUNICATIONS

(30) Priority: 18.07.1991 GB 91155200
(43) Date of publication of application: 04.05.1994
(73) Proprietor: TELSIS HOLDINGS LIMITED, Fareham, Hampshire PO15 5TT (GB)
(72) Inventor: Wilson, Jeffrey, Fareham, Hampshire P016 70H (GB)
(74) Representative: Pilch, Adam John Michael
(86) International application number: GB9201332
(87) International publication number: WO9302521

(56) References cited:
- WO-A-87/05765
- US-A- 3 106 611
- US-A- 3 609 245
- US-A- 4 748 657

## Description

This invention relates to a telecommunications service network.

A public telecommunications network may include a plurality of user terminals interconnected with each other by a telephone exchange. Normally each user terminal would be a telephone although it is now common for terminals to comprise tele-typewriters, facsimile apparatus, computer ports or the like. The network allows for the transmission of information in digital or analogue form along an electrical cable, optical fibres or even as radio signals. The network may also allow for the communication of information representative of audio or video signals. The telephone exchange is a local switching office whereby a user terminal can be selectively connected with any other terminal in the network to allow for private communications between users. The local switching office may be connected to other switching offices by trunk lines to allow for user transmissions between different telephone exchanges.

A telephone exchange is designed to have a switching capacity less than the number of user terminals for reasons of economy but to provide such capacity as to offer subscribers an acceptable degree of line availability. The provision of various services, such as weather forecast, speaking clock, local radio, or interactive services such as banking, allow a terminal user to dial and obtain some information as and when it is desired. In order for a user to take advantage of these telephone services from a telephone terminal, it is necessary for the user to dial the telephone number of the relevant service. In many standard systems, the user first lifts the telephone handset and the telephone terminal signals to the local exchange, usually by drawing a DC current. The user then dials the service number by pulse dialling or audio frequency signalling. The call is then connected by the exchange to the requested service. If the user has an audio frequency signalling pad, then it may be possible for the user to interact with the service selected. Alternatively, the service may be responsive to voice or word recognition. However, in all cases, the user will be taking up switching capacity in the telephone exchange for the duration of the call. The user would, therefore, be discouraged from, say, listening to a radio station over the telephone (if this service were to be available from a service provider) for a long period of time because of the expense of the call.

The concept of local services is well established, and one such local service is now often a local radio station. However, despite the widespread availability of information and entertainment, a consumer frequently either cannot find the required service or, if the service is available, the timing of the service is not convenient to the consumer. It would therefore be desirable for consumers to have simple access to a multiplicity of services.

The problem for broadcast media is that, in the case of local radio, the commonality of interest is set only by the listeners' co-location in the same town or district, whereas individuals' interests are more often defined by other factors, such as career, pastimes and lifestyle. The provision of services to such groups can conveniently be expressed by the term "narrowcasting" which contrasts with the general concept of broadcasting that, by its very nature, cannot address individuals' requirements for information or entertainment services at times that are convenient to the individual rather than to the network.

One way to meet such individuals' requirements for a multiplicity of services is to use the telephone network. If a greater variety of services were on offer, particularly if such services catered for minority interests not well served by other broadcasting media, users would be encouraged to make greater use of dial-up service systems. In a standard telecommunications network, if the number of services offered to users is particularly large, or if a service becomes very popular at a specific time, then the telephone exchange may become overloaded and run out of switching capacity. Services by their very nature should be exploitable by more than one user. This contrasts with person to person private telephone calls which generally are between just two users at any one time. It does not, therefore, represent efficient use for a service system to be placed in the telecommunications network in a manner equivalent to an ordinary user terminal.

US Patent US-A-3 106 611 discloses a special service telephone concentrator for hotels or the like in which an interface unit switches between telephone calls from the hotel switchboard and selected audio services. Each telephone terminal is provided with a selector switch, such as a wafer switch, which selects the required audio service by means of an additional conductor connected to the interface unit.

According to the invention there is provided an interface for a telecommunications service network, the interface being connectable between a telecommunications switching exchange and a plurality of fixed or mobile user terminals, the interface also being connectable to a service bank for transmitting selected ones of a plurality of services, the interface including switching means provided between the switching exchange, the service bank and each of at least some of the user terminals, wherein selective setting of each of the switching means provides connection between the respective user terminal and either the switching exchange or the service bank, the interface being responsive to an operation of one of the user terminals to set the respective switching means to select connection between the user terminal and the service bank, each switching means including sensing means for sensing an attempted incoming call to the respective user terminal when selectively connected to the service bank,
characterised in that the interface is capable of use with standard telephone user terminals in a public telecommunications system by virtue of the switching means in the interface being responsive to standard operational signals from the user terminals.

It is possible to have a plethora of services installed at a single location within the service bank. In such a public telecommunications system, a telephone user can communicate with the terminals of other telephone users in a known manner via the switching exchange. However, if the user wishes to access the service bank by telephone and select a service, then this can be achieved without using any of the switching capacity of the switching exchange. The user first lifts the handset of the telephone to enter the telecommunications system. The telephone is directly connected by, for example, telephone cable, to the telephone exchange via the user interface. Once the telephone handset has been raised by the user, the telephone draws current from the exchange and awaits a user operation. If the user dials a standard number representative of another user terminal that is recognised by the telephone exchange, then switching terminals in the exchange direct the user to the other terminal. If, however, a specified standard telephone signal is transmitted by the user representative of the service bank, then the sensing means in the user interface detects the signal and connects the user's terminal directly to the service bank, by-passing the telephone exchange.

Preferably the user interface is located in, or close to, the telephone exchange and the service bank is itself in, or close to, the telephone exchange so as to economise on cabling linking the interface to the service bank. In such a system, a user may have access to the service bank for long periods of time without taking up any of the switching capacity of the telephone exchange. Accordingly, it is possible for a different charging system to apply for calls to the service bank via the user interface.

If, for instance, the user wishes to listen to a radio station that transmits from the service bank, then the user might be connected to the service bank for thirty minutes or more. It is therefore desirable that the user's telephone terminal be not totally isolated from the rest of the telecommunications system when the user is connected to the service bank for such long periods and that the user can be made aware of any attempted incoming call from the switching exchange. Accordingly, the sensing means in the user interface is capable of also sensing an attempted incoming call from the exchange when the user is connected to the service bank. The sensing means can then respond in a number of different ways. As one option, the sensing means can provide a call breakthrough facility so as to switch the user's terminal automatically back into the main public telecommunications system (that is, provide a connection to the switching exchange) so that the terminal can receive the incoming call. Alternatively, the sensing means can provide a call indication facility whereby the user is made aware of an attempted incoming call by, for example, a visual indicator such as a light on the terminal or an audible indication such as a tone; the user can then choose whether or not to receive the incoming call by terminating the connection to the service bank by replacing the terminal handset. Suitable means such as a switch can be provided on the terminal to allow the user to select between these different modes of operation of the sensing means. As a further option, the sensing means could be inhibited by the switch to prevent interruption when the user wishes to have continuous connection to a programme or the like provided by the service bank without receiving incoming calls. Finally, it may be desired for the terminal to have the ability for the user to dial out even when a service is being received from the service bank.

If such a service network is employed in a public telecommunications system, then a user terminal could selectively have access to a whole range of services in the service bank. Whilst accessing the service bank, the user does not take up any of the switching capacity of the exchange. It is therefore impossible for the switching exchange to be saturated due to insufficient switching capacity on the basis of calls to the service bank. Since each user terminal has its own user interface with the service bank, it is always able to gain access to the service bank provided that the user knows the particular signal required to be transmitted down the line to the sensing means in the user interface in order to access the service bank.

The quality of transmissions from the service bank is not dictated by the public telecommunications system as a whole and hence it is possible for services within the bank to be of a high audio or visual quality according to demand. Digital technology allows for the transmission of, for instance, audio signals that are of hi-fi quality. The ISDN standard even allows for high quality stereo signals to be transmitted, with or without still or moving video picture data. It would be possible for the user's telephone terminal to itself have a subscriber ISDN interface connecting the service network to both the telephone and the user's personal hi-fi system. The user may then be able to listen on the hi-fi system to high quality music or radio broadcasts that have been transmitted from the service bank. Thus, although it is possible for the service facilities to be received on a standard two-wire telephone, the facilities may be enhanced by the use of further equipment.

In a further embodiment of the invention, the sensing means in the user interface includes a timer activated by lifting of the handset by the user. Should the user not dial a number within a predetermined time, then the sensing means causes automatic actuation of the switch in the user interface and connects the user's terminal with the service bank in the service network. This can provide an alternative means of connection to the service bank other than dialling a specific code for this purpose or sending a characteristic signal by some other means. The provision of the timer allows other facilities to be made available. For example, if the user wishes to be woken by a selected audio service available from the service bank such as a radio station, the user would set the predetermined time to the desired alarm time. When the alarm time is reached, the radio station is automatically transmitted from the service bank to the user terminal via the switch in the user interface. If, in the meantime, another user is attempting to call the user's terminal, then the sensing means would sense this and respond accordingly, such as by call breakthrough or actuation of the indicator means.

Also, a service bank may include a series of audio services such as selectable music titles. In such a situation, a user may be able to compose any desired medley of music titles without having to rely on a radio station. The service bank thereby acts as a music library within easy access of a user.

The invention will now be further described, by way of illustrative and non-limiting example, with reference to the accompanying drawings, in which:
Figure 1 is a schematic diagram of a standard public telecommunications system; and
Figure 2 is a schematic illustration of a public telecommunications system incorporating a telecommunications service network according to an embodiment of the invention.

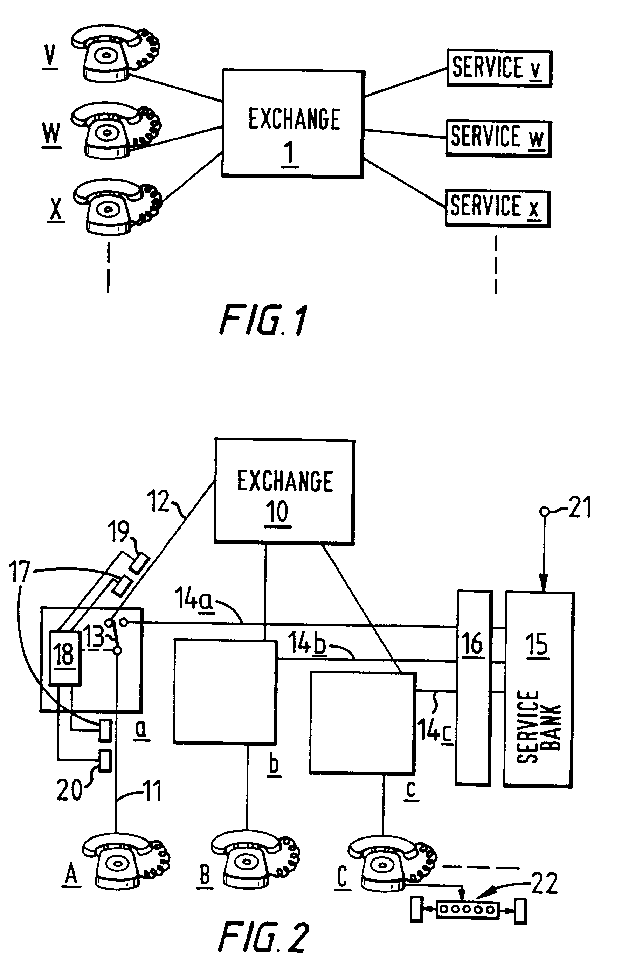

Referring to Figure 1, a telephone switching exchange 1 is shown connected to various user telephone terminals V, W, X, ..... and to service terminals v, w, x, ..... In such a public telecommunications system, a user of, for instance, the terminal V can access any one of the services provided by the service terminals v, w, x, by dialling an appropriate telephone number. Equally, the user could dial any one of the other terminals W, X, ..... No distinction is made between the service terminals v, w, x ..... and the user terminals V, W, X and hence the user must always pass through the switching exchange 1 in order to communicate with a service.

Referring to Figure 2, there is shown a schematic representation of a telecommunications service network embodying the invention and incorporated in a public telecommunications system. A plurality of user telephone terminals A, B, C, ..... are interconnected by an exchange 10. Each user terminal A, B, C is respectively connected to a user interface a, b, c, ..... The user interface a is shown in detail. The terminal A is connected to the interface a by a cable 11. The interface a is connected to the exchange 10 by a cable 12. The cable 11 is normally connected to the cable 12 by a switch 13 so that the terminal A is fully connectable to the network of terminals B, C, ..... by the exchange 10. The switch 13 may or may not be a physical switch, and may be connected to associated circuitry providing the necessary network conditions. A service cable 14a connects the interface a to a service bank 15 via a multiplexer/distributor 16. The multiplexer/distributor 16 allows access to a selected service within the service bank 15 by the service cable 14a for the interface a, by a service cable 14b for the interface b, by a service cable 14c for the interface c, and so on.

A detector 17 in the interface a picks up signals from the cable 11 and a controller 18 senses these signals. If the user of the terminal A sends a signal down the cable 11 from a telephone at the terminal A that is representative of an access code for the service bank 15, then the controller 18 senses the signal via the detector 17 and causes the switch 13 to connect the terminal A to the multiplexer/distributor 16. The user of the terminal A can now communicate with the service bank 15 in a known manner. The detector 17 also senses signals on the cable 12, such as those representative of an attempted incoming call from another user, for example, a user of a telephone at the terminal B. The manner of treatment of such an attempted incoming call depends on the mode of operation of the system. In one mode, the controller 18 provides a call breakthrough facility which switches the user's terminal back into communication with the exchange 10. In such a case, the controller 18 will respond to detection of the incoming call by the detector 17 and will cause the switch 13 to connect the terminal A to the exchange 10. As a result, the user of the terminal B will be able to interrupt the service and communicate directly with the user of the terminal A. In another mode of operation, the controller 18 can provide an indication of an attempted incoming call from another user. In this case, in response to detection of an attempted incoming call by the detector 17, the controller 18 will cause an alert signal to be generated by an alert generator 20 and passed to the terminal A along the line 11. The alert signal may provide an audible indication so that the user of the terminal A will be aware of the attempted incoming call; alternatively, the alert signal may cause a visual indicator such as a light (not shown) to show on the terminal A. The user may then respond accordingly, either by ignoring the call indication or by terminating the connection to the service bank 15 and receiving the incoming call. As a further option, the controller 18 may be set so as to prevent interruption of a programme or similar provided by the service bank 15. In that case, the switch 13 will remain connected to the service cable 14a and the controller 18 will generate an engaged tone by means of a tone generator 19 connected to the line 12 so as to notify the user of the terminal B that the terminal A is in use. A selection switch or key (not shown) can be provided at the terminals A, B, C, ... so as to allow the user to select between the above modes of operation of the controller 18. Operation of the selection switch would then send signals along the cable 11 which would be detected by the detector 17 and the controller 18 would be set accordingly.

The service bank 15 is shown in Figure 2 as receiving an external input via a terminal 21. This allows the service bank 15 to have access to external services, such as local radio stations from other regions which may not be readily receivable by radios in the particular region. This would make it possible for an extended variety of services to be provided, not limited by the storage capacity of the service bank 15.

Although the system shown in Figure 2 is intended to be usable with standard 2-wire telephones, the service facilities may be enhanced by the addition of further equipment. For example, the telephone at the terminal C is shown as having a connection to a stereo system 22 such that, with a suitable digital system such as one complying with the ISDN standard, high quality stereo audio may be received and amplified by the stereo system 22. Alternatively or in addition to this, the terminals could be made capable of receiving still or moving video picture data. In that case, connection to a display device such as a television or monitor screen would be necessary. The telephone at the terminal C is shown as having a connection to the stereo system 22 and such a telephone would require special adaptation for this purpose. Alternatively, an interface could be provided between the telephone and the cable 11, the terminal then being a standard telephone with all peripheral connections (such as to the stereo system and/or the display screen) being made to the interface.

Telecommunications service networks as described above are extremely versatile and, once incorporated into public telecommunications systems, allow for a wide variety of user services.

## Claims

1. An interface for a telecommunications service network, the interface (a;b;c) being connectable between a telecommunications switching exchange (10) and a plurality of fixed or mobile user terminals (A;B;C), the interface (a;b;c) also being connectable to a service bank (15) for transmitting selected ones of a plurality of services, the interface (a;b;c) including switching means (13) provided between the switching exchange (10), the service bank (15) and each of at least some of the user terminals (A;B;C), wherein selective setting of each of the switching means (13) provides connection between the respective user terminal (A;B;C) and either the switching exchange (10) or the service bank (15), the interface (a;b;c) being responsive to an operation of one of the user terminals (A;B;C) to set the respective switching means (13) to select connection between the user terminal (A;B;C) and the service bank (15), each switching means (13) including sensing means (18) for sensing an attempted incoming call to the respective user terminal (A;B;C) when selectively connected to the service bank (15),
characterised in that the interface (a;b;c) is capable of use with standard telephone user terminals (A;B;C) in a public telecommunications system by virtue of the switching means (13) in the interface (a;b;c) being responsive to standard operational signals from the user terminals (A;B;C).

2. An interface according to claim 1, wherein the setting operation of the user terminal (A;B;C) comprises dialling a predetermined code.

3. An interface according to claim 1, wherein the setting operation of the user terminal (A;B;C) comprises lifting a handset of the user terminal, a signal being sent from the user terminal (A;B;C) to the interface (a;b;c) which is then responsive to select connection to the service bank (15) if the signal is maintained for longer than a predetermined time.

4. An interface according to claim 1, claim 2 or claim 3, wherein each switching means (13) is responsive to a sensed attempted incoming call to change connection of the respective user terminal (A;B;C) from the service bank (15) to the switching exchange (10).

5. An interface according to any one of the preceding claims, wherein each switching means (13) is responsive to a sensed attempted incoming call to provide an indication at the respective user terminal (A;B;C).

6. An interface according to claim 5, wherein the indication is an audible indication.

7. An interface according to claim 5, wherein the indication is a visual indication.

8. An interface according to any one of the preceding claims, wherein the service bank (15) includes means (21) for receiving external data.

## Patentansprüche

1. Interface für ein Netzwerk von Telekommunikationsdienstleistungen, wobei das Interface (a; b; c) zwischen einem Umschaltaustauscher für Telekommunikation und eine Mehrzahl von festen oder beweglichen Benutzerterminals (A; B; C) angeschlossen werden kann, wobei das Interface (a; b; c) auch mit einer Bank bzw. Bibliothek (15) von Dienstleistungen verbindbar ist, um aus einer Mehrzahl von Dienstleistungen ausgewählte zu übertragen, wobei das Interface (a; b; c) Schalteinrichtungen (13) aufweist, die zwischen dem Umschaltaustauscher (10), der Dienstleistungsbibliothek (15) und jedem von zumindest einigen der Benutzerterminals (A; B; C) vorgesehen sind, wobei das gezielte Einstellen jeder der Umschalteinrichtungen (13) die Verbindung zwischen dem betreffenden Benutzerterminal (A; B; C) und entweder dem Umschaltaustauscher (10) oder der Dienstleistungsbibliothek (15) bereitstellt, das Interface (a; b; c) auf den Betrieb an einem der Benutzerterminals (A; B; C) anspricht, um die jeweiligen Umschalteinrichtungen (13) so einzustellen, daß sie die Verbindung zwischen dem Benutzerterminal (A; B; C) und der Dienstleistungsbibliothek (15) auswählen, wobei jede Schalteinrichtung (13) eine Abfühleinrichtung (18) aufweist, um den Versuch einer eingehenden Anfrage an das jeweilige Benutzerterminal (A; B; C) abzufühlen, wenn dieses gezielt mit der Dienstleistungsbibliothek (15) verbunden ist, **dadurch gekennzeichnet,** daß das Interface (a; b; c) in der Lage ist, mit standardmäßigen Telefonbenutzeranschlüssen (A; B; C) in einem öffentlichen Telekommunikationssystem benutzt zu werden, indem die Umschalteinrichtung (13) in dem Interface (a; b; c) auf standardmäßige Betriebssignale von den Benutzerterminals (A; B; C) anspricht.

2. Interface nach Anspruch 1, wobei der Einstellvorgang des Benutzerterminals (A; B; C) das Wählen eines vorbestimmten Codes aufweist.

3. Interface nach Anspruch 1, wobei der Einstellvorgang des Benutzerterminals (A; B; C) das Anheben eines Hörers bzw. in der Hand zu haltenden Teiles des Benutzerterminals aufweist, wobei ein Signal von dem Benutzerterminal (A; B; C) zu dem Interface (a; b; c) geschickt wird, welches dann so anspricht, daß es die Verbindung zu der Dienstleistungsbibliothek (15) auswählt, wenn das Signal länger als eine vorbestimmte Zeit aufrechterhalten wird.

4. Interface nach Anspruch 1, 2 oder 3, wobei jede Umschalteinrichtung (13) auf das Erfühlen des Versuchs einer eingehenden Anfrage anspricht, um die Verbindung des betreffenden Benutzerterminals (A; B; C) von der Dienstleistungsbibliothek (15) zu dem Umschaltaustauscher (10) zu ändern.

5. Interface nach einem der vorstehenden Ansprüche, wobei jede Umschalteinrichtung (13) auf den abgefühlten Versuch einer eingehenden Anfrage anspricht, um an dem betreffenden Benutzerterminal (A; B; C) eine Anzeige bereitzustellen.

6. Interface nach Anspruch 5, wobei die Anzeige eine hörbare Anzeige ist.

7. Interface nach Anspruch 5, wobei die Anzeige eine sichtbare Anzeige ist.

8. Interface nach einem der vorstehenden Ansprüche, wobei die Dienstleistungsbibliothek (15) Einrichtungen (21) für das Empfangen externer Daten aufweist.

## Revendications

1. Interface pour un réseau de services de télécommunications, l'interface (a;b;c) pouvant être connectée entre un centre de commutation (10) de télécommunications et une pluralité de terminaux (A;B;C) d'utilisateur fixes ou mobiles, l'interface (a;b;c) pouvant aussi être connectée à une banque de services (15) pour transmettre certains, choisis, d'une pluralité de services, l'interface (a;b;c) incluant un moyen (13) de commutation disposé entre le centre de commutation (10), la banque de services (15) et chacun d'au moins certains des terminaux (A;B;C) d'utilisateur, dans laquelle le réglage sélectif de chacun des moyens (13) de commutation réalise la connexion entre le terminal (A;B;C) d'utilisateur respectif et soit le centre de commutation (10) soit la banque de services (15), l'interface (a;b;c) étant sensible à la mise en oeuvre de l'un des terminaux (A;B;C) d'utilisateur pour régler le moyen (13) de commutation respectif pour choisir la connexion entre le terminal (A;B;C) d'utilisateur et la banque de services (15), chaque moyen (13) de commutation incluant un moyen (18) de détection destiné à détecter une tentative d'appel entrant vers le terminal (A;B;C) d'utilisateur respectif lorsqu'il est connecté sélectivement à la banque de services (15),
caractérisé en ce que l'interface (a;b;c) peut s'utiliser avec des terminaux (A;B;C) d'utilisateur de téléphone standard dans un système public de télécommunications grâce au moyen (13) de commutation dans l'interface (a;b;c) qui est sensible à des signaux de mise en oeuvre standards issus des terminaux (A;B;C) d'utilisateur.

2. Interface selon la revendication 1, dans laquelle l'opération de réglage du terminal (A;B;C) d'utilisateur comprend la numérotation d'un code prédéterminé.

3. Interface selon la revendication 1, dans laquelle l'opération de réglage du terminal (A;B;C) d'utilisateur comprend le fait de saisir un combiné d'un terminal d'utilisateur, un signal étant envoyé du terminal (A;B;C) d'utilisateur à l'interface (a;b;c) qui réagit alors pour choisir la connexion vers la banque de services (15) si le signal est maintenu pendant un temps plus long qu'un temps prédéterminé.

4. Interface selon la revendication 1, la revendication 2 ou la revendication 3, dans laquelle chaque moyen (13) de commutation est sensible à une tentative d'appel entrant détectée pour basculer la connexion du terminal (A;B;C) d'utilisateur respectif de la banque de services (15) au centre de commutation (10).

5. Interface selon l'une quelconque des revendications précédentes, dans laquelle chaque moyen (13) de commutation est sensible à une tentative d'appel entrant détectée pour fournir une indication au terminal (A;B;C) d'utilisateur respectif.

6. Interface selon la revendication 5, dans laquelle l'indication est une indication audible.

7. Interface selon la revendication 5, dans laquelle l'indication est une indication visuelle.

8. Interface selon l'une quelconque des revendications précédentes, dans laquelle la banque de services (15) comprend un moyen (21) destiné à recevoir des données externes.
